Europäisches Patentamt

European Patent Office

Office européen des brevets

(11) Publication number: **0 469 296 A1**

## EUROPEAN PATENT APPLICATION

(21) Application number: **91110578.1**

(22) Date of filing: **26.06.91**

(51) Int. Cl.⁵: **B65B 51/22**, B65B 7/28

(30) Priority: **03.08.90 US 572821**

(43) Date of publication of application:
**05.02.92 Bulletin 92/06**

(84) Designated Contracting States:
**AT BE CH DE DK ES FR GB GR IT LI NL SE**

(71) Applicant: **FMC CORPORATION**
**200 East Randolph Drive**
**Chicago Illinois 60601(US)**

(72) Inventor: **Fang, Jin-Liou**
**1079 Foxhurst Way**
**San Jose, California 95120(US)**
Inventor: **Rough, J. Kirkwood H.**
**264 South 14th Street**
**Santa Clara, California 95112(US)**

(74) Representative: **Altenburg, Udo, Dipl.-Phys. et al**
**Patent- und Rechtsanwälte**
**Bardehle-Pagenberg-Dost-Altenburg-Frohwitter & Partner Postfach 86 06 20**
**W-8000 München 86(DE)**

(54) **Assembly for sealing containers by induction welding.**

(57) An induction sealing assembly having a single turn induction coil (71) for sealing a metallic-plastic membrane (55) for sealing containers (15) having a variety of opening shapes. The induction coil (71) features a critical ratio of coil height to coil diameter which concentrates flux induced by coil current so a single metallic-plastic membrane can be used to close a variety of shapes of container openings. The sealing assembly also features quick evacuation of air and the substitution of an inert gas into the container prior to sealing.

FIG_7

## BACKGROUND OF THE INVENTION

The present invention relates to induction sealing assemblies, and more particularly, to an induction sealing assembly for sealing round, oval and rectangular containers using precut or roll stock membrane for the container lids.

Plastic containers are commonly used for the packaging of food and for a wide variety of other items wherein a plastic lid is bonded to the container by the application of heat. One method of bonding involves the use of a circular laminated plastic lid having a layer of metal foil. A power supply provides an electrical current to a nearby induction coil which induces an electrical current into the metal foil to develop heat which melts portions of the lid and container and fuses the lid to the container lip. Coils having non-circular shapes can be used with lids and containers having corresponding non-circular shapes.

## SUMMARY OF THE INVENTION

The present invention discloses an induction sealing assembly using a single turn coil to seal a precut plastic lid or a roll stock foil membrane to a plastic container. The lid can have a shape which is round, oval, or rectangular and the container has an opening with a shape corresponding to the shape of the lid. The assembly includes a nest having a recess for holding a container to be sealed, and a movable sealing head for holding a lid or foil membrane and for positioning the lid relative to an opening in the container. Means are provided to secure a portion of the sealing head against a portion of the nest to form an air-tight chamber between a lower portion of the sealing head and an upper portion of the nest. The induction sealing assembly uses a vacuum source and a source of inert gas to flush air from the container prior to sealing. An induction coil mounted in the sealing head induces a heating electrical current in the lid to seal the lid to the container.

## BRIEF DESCRIPTION OF THE DRAWINGS

Figure 1 is a cross section of an induction sealing assembly of the present invention.

Figure 2 is a plan view of the present invention taken along line 2 - 2 of Figure 1.

Figure 3 is an enlarged cross section of a foil membrane for sealing a container opening.

Figure 4 is a schematic drawing of an induction coil and a power source used with the present invention.

Figure 5 is a schematic drawing of an apparatus for securing and releasing the foil membrane from the sealing assembly.

Figures 6 - 8 show a sequence of operation of the apparatus of the present invention as a foil membrane lid is sealed to a container.

Figure 9 is a plan view of an induction coil used in the present invention.

Figure 10 is a cross section of the induction coil taken along line 10 - 10 of Figure 9.

## DESCRIPTION OF THE PREFERRED EMBODIMENT

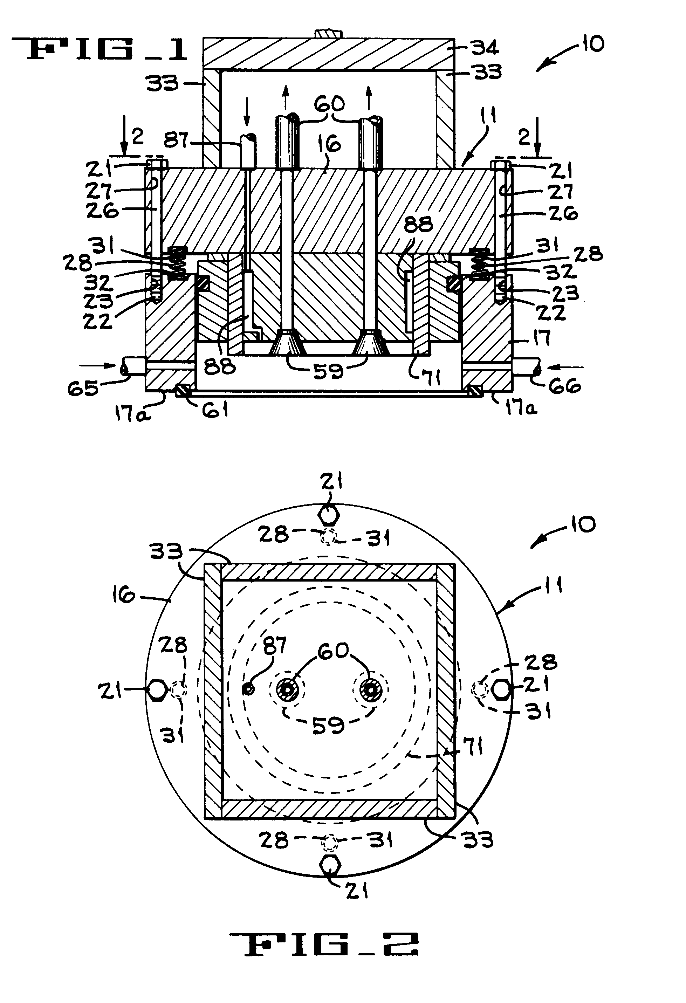

An induction sealing assembly 10 of the present invention (Figs. 1, 2, 6 - 8) includes a sealing head 11 and a nest 12 for holding a container 15. Sealing head 11 includes a mounting plate 16 connected to a cylindrical member 17 by a plurality of bolts 21. A threaded lower end 22 of each bolt 21 (Fig. 1) is mounted in a threaded bore 23 in cylindrical member 17. A smooth upper portion 26 of each bolt 21 is slidably mounted in a bore 27 in plate 16. Mounting plate 16 is biased upwardly from cylindrical member 17 by a plurality of springs 28 each mounted in a pair of shallow bores 31, 32 in plate 16 and in cylindrical member 17. A plurality of vertical plates 33 (Figs. 1, 2) are welded or otherwise attached to mounting plate 16, and a horizontal plate 34 (Figs. 1, 6 - 8) is mounted atop vertical plates 33.

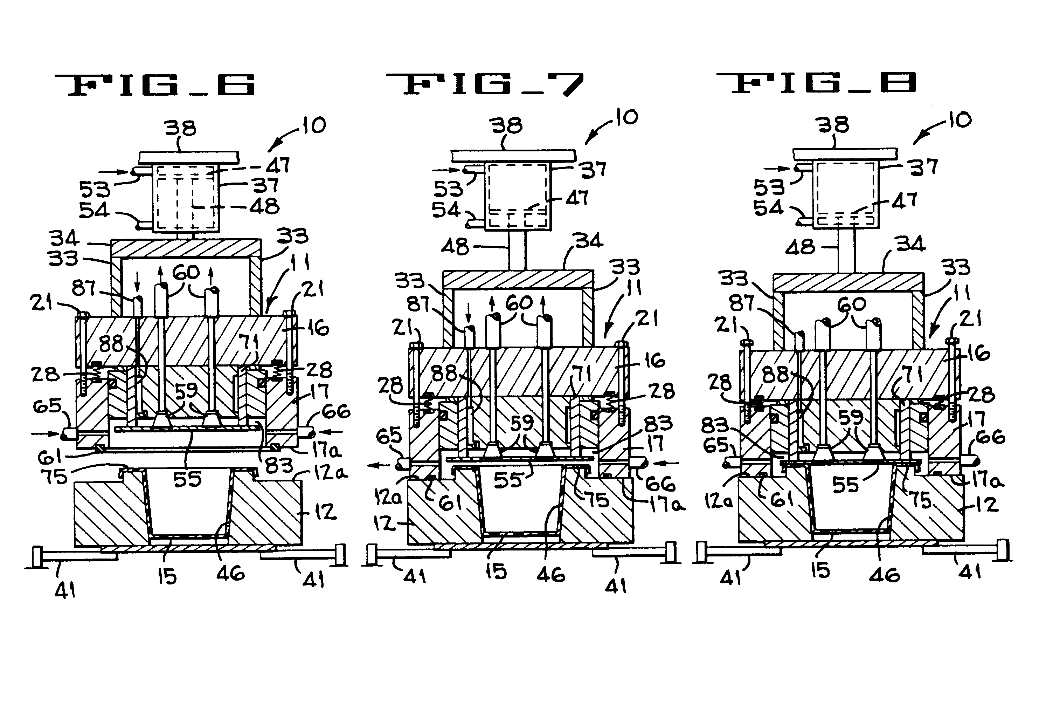

An air cylinder 37 (Figs. 6 - 8) attached to a fixed mounting base 38 is used to position sealing head 11 relative to container nest 12. Nest 12 is supported by a carrier 41 which moves nest 12 into a position below sealing head 11 as shown in Figures 6 - 8. Container 15 fits into a recess 46 in nest 12. A piston 47 in air cylinder 37 is connected to horizontal plate 34 by a piston rod 48 to raise and lower sealing head 11 relative to fixed mounting base 38. When air is moved into air cylinder 37 through an inlet 53 and out an inlet 54, piston 47 moves downward causing head 11 to move from the position shown in Figure 6 to the position shown in Figure 7.

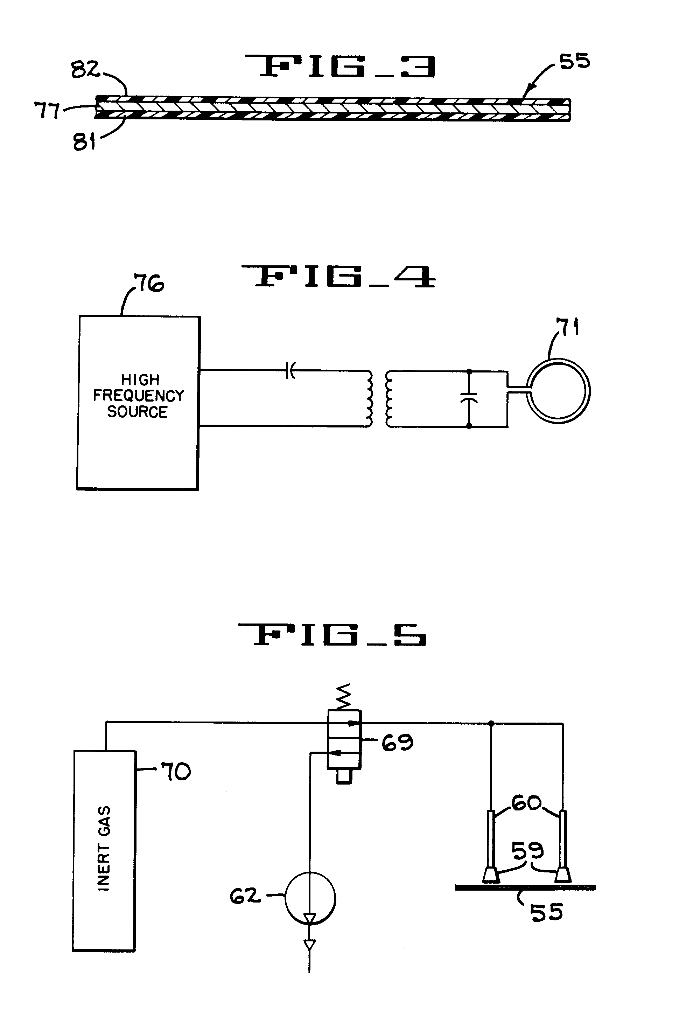

During a sealing operation a precut membrane 55 (Figs. 3, 6 - 8) is fed into position adjacent to a pair of vacuum cups 59, and a vacuum from a vacuum pump 62 (Fig. 5) is applied to a pair of hoses 60 connected to cups 59 to secure membrane 55 to sealing head 11 as shown in Figure 6. The membrane can be fed from a roll of membrane stock to a cutter (not shown) and the membrane cut to a rectangular or other shape. This same piece of membrane can be used to seal a variety of shapes of openings at the top of container 15 as long as the piece of membrane is larger than the opening. Carrier 41 moves nest 12 and container 15 into an aligned position beneath membrane 55 (Fig. 6) where the sealing operation is performed. A downward movement of piston 47 and sealing head 11 presses a lower end 17a of member 17 against a shoulder 12a of container nest 12 with a gasket 61 (Figs. 6 - 8) forming a seal between lower end 17a and shoulder 12a. Vacuum is applied to an inlet 65 (Fig. 7), and an inert gas, such as nitrogen, is applied to an inlet 66 to flush air from container 15. After a predetermined amount of time of flushing air from the container, a switch 69 (Fig. 5) disconnects vacuum pump or vacuum source 62 and connects a source of pressurized inert gas 70 to cups 59, thus releasing membrane 55 (Fig. 8) from cups 59. The release of the membrane from the cups prevents the sealing area of the membrane from wrinkling. The pressurized inert gas speeds up the cycle time and further reduces the residual oxygen content in the headspace of a sealed container.

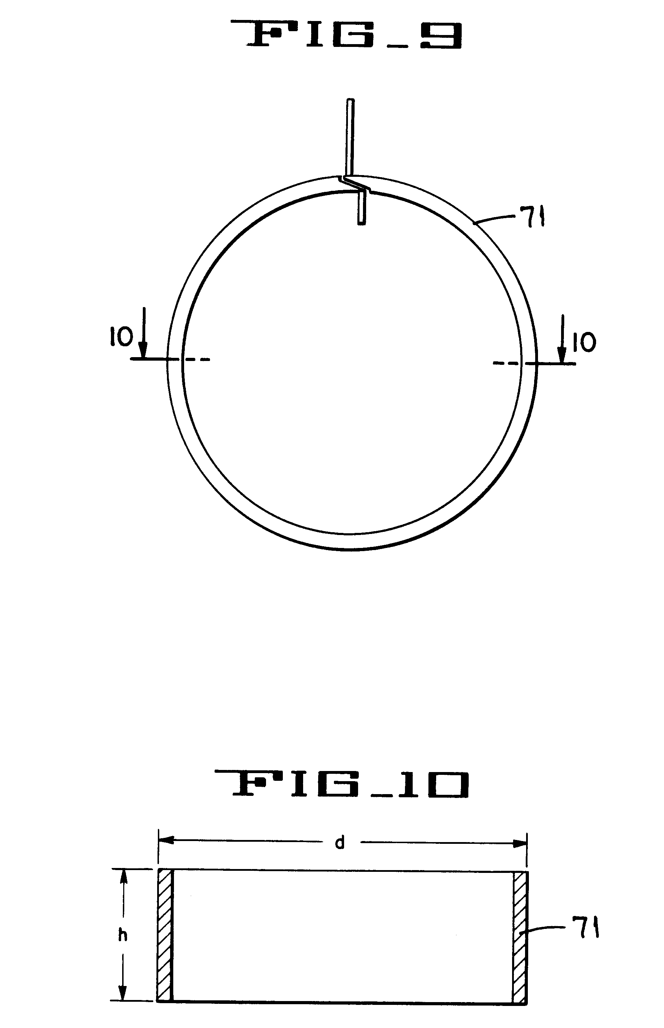

Further downward movement of piston 47 and mounting plate 16 causes an induction coil 71 (Fig. 8) to press membrane 55 against a lip 75 (Fig. 8) of container 15. A high frequency energy source 76 (Fig. 4) provides electrical energy to coil 71 (Figs. 4, 6 - 10) which induces an electrical current in a metal layer 77 (Fig. 3) of membrane 55. The frequency of operation of energy source 76 should be between 30 KHz and 4mHz. Layer 77 of membrane 55 can be aluminum, while a layer 81 can be a sealant, and a layer 82 can be made of a polyester or polypropylene material. The electrical current in metal layer 77 causes the sealant in layer 81 to melt and seal membrane 55 to lip 75 (Fig. 8) of container 15. To obtain the best results of sealing membrane 55 to container 15 without using ferrites to concentrate flux, a height h (Fig. 10) of the coil should be from 31% to 50% of the diameter d of coil 71. This ratio of h to d concentrates coil flux and allows the same coil to be used with circular, rectangular or oval shaped container lids. Top layer 82 can have a thickness of at least .5 mils to provide a sturdy lid for a container.

After membrane 55 is sealed to container 15, air is forced through inlets 65, 66 (Fig. 8) into an area 83 above membrane 55 to break the vacuum between head 11 and nest 12. Air is forced into inlet 54 and out inlet 53 (Fig. 8) causing piston 47 to return to the position shown in Figure 6 so another membrane 55 can be accepted by sealing head 11. Compressed inert gas is forced through an inlet 87 into a cooling passage 88 (Figs. 1, 6) to prevent heat build up in coil 71. Some of the inert gas from inlet 87 remains in passage 88 and area 83 for the next cycle and helps to reduce oxygen content in area 83.

Some of the advantages of the present invention are:

a. The vacuum/gassing portion is designed so that nitrogen gas is entered into the air-tight chamber directly between the membrane and the container. Nitrogen pressure and speed easily produces a laminar flow pattern to push headspace air from between the membrane lid and the container. The result is a very low oxygen content in the residual gas in a sealed container.

b. The use of compressed nitrogen to release the membrane from the vacuum cups results in a short cycle time. This nitrogen also helps reduce the oxygen content in the space above the filled container to give a head start in providing a low oxygen content in the next container to be filled.

c. Using the ratio of coil d/h and the energy frequency listed above, the present invention can be used to seal a variety of shapes of containers, including round, rectangular and oval shapes. Also, because of the ratio of coil d/h most induction coils do not need ferrites to concentrate electromagnetic energy. Ferrites are brittle, fragile and expensive and are a potential source of food contamination if broken, and particles are allowed to fall into a filled container.

d. A cooling passage on the inside area of the induction coil allows compressed air or nitrogen to pass through and cool the induction coil.

Although the best mode contemplated for carrying out the present invention has been herein shown and described, it will be apparent that modification and variation may be made without departing from what is regarded to be the subject matter of the invention.

**Claims**

1. An induction sealing assembly for sealing a plurality of shapes of metallic-plastic lids to a corresponding plurality of shapes of container openings, each of said containers having a lip adjacent to said opening, said assembly comprising:

a nest having a recess for holding a container;

a movable sealing head having means for holding a metallic-plastic lid;

means for moving said sealing head to position said metallic-plastic lid relative to an opening in said container;

means for securing a portion of said sealing head against a portion of said nest to form an air-tight chamber between a lower portion of said sealing head and an upper portion of said nest;

venting means for passing an inert gas into said chamber and for removing air from said chamber; and

an induction coil mounted in said sealing head for inducing a heating current in said plastic lid when said lid is against a lip of said container.

2. An induction sealing assembly as defined in claim 1 wherein said induction coil is shaped so a ratio of the height of said coil to the diameter of said coil is between 0.31 and 0.5, to provide a concentration of a flux caused by a current in said coil, to facilitate sealing a variety of shapes of lids to a variety of shapes of container openings.

3. An induction sealing assembly as defined in claim 1 including means for pressing said induction coil against said membrane to secure said membrane against said container lip while said induction coil induces said heating current in said membrane.

4. An induction sealing assembly as defined in claim 1 wherein said venting means includes means for directing said inert gas into an area directly between said lid and said container opening to replace air in said container.

5. An induction sealing assembly as defined in claim 4 including a vacuum pump and means for coupling said vacuum pump to said area between said lid and said container to remove air from said container as said gas is directed into said area.

6. An induction sealing assembly for sealing a metallic-plastic membrane to anyone of a plurality of shapes of container openings, each of said containers having a lip adjacent to said opening, said assembly comprising:

a nest having a recess for holding a container;

a movable sealing head having means for holding a membrane;

means for moving said nest in a generally horizontal direction to position said nest beneath said sealing head;

means for moving said sealing head in a generally vertical direction to position said membrane relative to an opening in a container in said recess;

means for securing a portion of said sealing head against a portion of said nest to form an air-tight chamber between a lower portion of said sealing head and an upper portion of said nest;

venting means for passing an inert gas into said chamber and for removing air from said chamber; and

an induction coil mounted in said sealing head for inducing a heating current in said membrane when said membrane is against a lip of said container.

7. An induction sealing assembly as defined in claim 6 wherein said induction coil has a ratio of coil height to coil diameter between 0.31 and 0.5, to provide a concentration of flux caused by an electric current in said coil, to facilitate sealing a precut membrane to a container having any one of a variety of shapes of container openings.

8. An induction sealing assembly as defined in claim 7 wherein said venting means includes means for directing said inert gas into an area directly between said membrane and said container opening to replace air in said container with said inert gas.

FIG_1

FIG_2

## FIG_3

82
77
81
55

## FIG_4

76

HIGH
FREQUENCY
SOURCE

71

## FIG_5

70

INERT GAS

69

62

60

59

55

FIG_6    FIG_7    FIG_8

## FIG_9

10 → ---- ---- ← 10

71

## FIG_10

d

h

71

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | EP-A-0 362 799 (CONTINENTAL CAN)<br>* column 9, line 13 - column 10, line 40 *<br>* column 12, line 28 - column 13, line 6; figures 1,4 *<br>--- | 1,3-6,8 | B65B51/22<br>B65B7/28 |
| X | US-A-4 909 022 (CONTINENTAL CAN)<br>* column 3, line 44 - column 4, line 49; figures *<br>--- | 1,3-6,8 | |
| X | EP-A-0 350 601 (CONTINENTAL CAN)<br>* column 2, line 21 - column 3, line 19 *<br>* column 6, line 13 - line 57; figures *<br>--- | 1,3-6,8 | |
| A | EP-A-0 214 372 (R. BOSCH)<br><br>* page 5, line 5 - page 6, line 29; figures *<br>--- | 1,3,4,6,8 | |
| A | EP-A-0 223 517 (CONTINENTAL CAN)<br>* column 9, line 12 - column 10, line 14; figures *<br>--- | 1,3,6 | |
| A | FR-A-2 199 527 (STEL)<br>* page 6, line 17 - page 8, line 28; figures *<br><br>----- | 6,7 | TECHNICAL FIELDS SEARCHED (Int. Cl.5)<br><br>B65B |

The present search report has been drawn up for all claims

| Place of search | Date of completion of the search | Examiner |
|---|---|---|
| THE HAGUE | 07 NOVEMBER 1991 | JAGUSIAK A.H.G. |